# EUROPEAN PATENT SPECIFICATION

(11) **EP 3 940 026 B1**
(45) Date of publication and mention of the grant of the patent: **10.05.2023**
(21) Application number: 20848200.0
(22) Date of filing: 24.06.2020
(51) Int. Cl.: C08K 3/016, C08K 3/22, C08K 3/24, C08K 5/00, C08K 5/03, C08K 5/09, C08K 5/098, C08L 7/00, C08L 9/00, F16F 15/08, C08K 9/12

(54) **FLAME-RETARDANT VIBRATION
ISOLATION RUBBER COMPOSITION AND FLAME-RETARDANT VIBRATION ISOLATION RUBBER MEMBER**
FLAMMHEMMENDE, SCHWINGUNGSISOLIERENDE KAUTSCHUKZUSAMMENSETZUNG UND FLAMMHEMMENDES, SCHWINGUNGSISOLIERENDES GUMMIELEMENT
COMPOSITION DE CAOUTCHOUC ANTI-VIBRATION IGNIFUGE, ET ÉLÉMENT DE CAOUTCHOUC ANTI-VIBRATION IGNIFUGE

(30) Priority: 31.07.2019 JP 2019140725
(43) Date of publication of application: 19.01.2022
(73) Proprietor: Sumitomo Riko Company Limited, Komaki-shi, Aichi 485-8550 (JP)
(72) Inventor: MURATANI, Keiichi, Komaki-shi, Aichi 485-8550 (JP)
(74) Representative: Müller-Boré & Partner Patentanwälte PartG mbB
(86) International application number: PCT/JP2020/024815
(87) International publication number: WO 2021/019975

(56) References cited:
- WO-A1-2014/099397
- CN-A- 108 659 285
- JP-A- H07 166 047
- JP-A- 2003 147 050
- JP-A- 2005 146 256
- JP-A- 2008 007 730
- JP-A- 2008 501 849
- JP-A- 2009 227 695
- DATABASE CA [Online] CHEMICAL ABSTRACTS SERVICE, COLUMBUS, OHIO, US; 2 December 2005 (2005-12-02), WANG, QI ET AL: "Low-smoke halogen-free nonflammable conveyer belts", XP002806512, retrieved from STN Database accession no. 2005:1264007 -& CN 1 439 671 A (FUXIN RUBBER CO LTD [CN]) 3 September 2003 (2003-09-03)
- DATABASE CA [Online] CHEMICAL ABSTRACTS SERVICE, COLUMBUS, OHIO, US; 4 June 2019 (2019-06-04), FU, LIDAN ET AL: "Halogen-containing flame retardant and application thereof", XP002806513, retrieved from STN Database accession no. 2019:1078106 -& CN 109 836 817 A (HANGZHOU BENSONG NEW MATERIALS TECH CO LTD) 4 June 2019 (2019-06-04)
- DATABASE CA [Online] CHEMICAL ABSTRACTS SERVICE, COLUMBUS, OHIO, US; 16 October 2018 (2018-10-16), SHEN, WANGPING ET AL: "Low-smoke low-halogen flame-retardant conveyor belt covering rubber for coal mine and its preparation process", XP002806515, retrieved from STN Database accession no. 2018:1906869

## Description

The present invention relates to a flame-retardant vibration isolation rubber composition and a flame-retardant vibration isolation rubber member used for a vehicle such as a train or an automobile.

Generally, vibration isolation rubber members are used for trains and automobiles for the purpose of reducing vibration and noise. The vibration isolation rubber members are required to have flame retardancy, for example, in addition to a vibration isolation property such as a low dynamic-to-static modulus ratio (to have a reduced value of a dynamic-to-static modulus ratio [dynamic spring constant (Kd)/static spring constant (Ks)] as important properties. For the flame retardancy of rubber, a method of adding a flame retardant such as a halogen-based flame retardant, a phosphorus-based flame retardant, a metal hydroxide, or an antimony compound to a rubber composition is generally used (see Patent Literature 1 to 3, for example).

[Patent Literature 1]
   Japanese Patent Laid-Open No. 7-166047
[Patent Literature 2]
   Japanese Patent Laid-Open No. 2005-146256
[Patent Literature 3]
   Japanese Patent Laid-Open No. 2009-227695

However, a halogen-based flame retardant has an excellent flame-retardant effect, but on the other hand, there is a problem that black smoke is likely to be generated due to incomplete combustion and the like. Also, generation of such black smoke prevents smoke generation from being inhibited, which is strictly required in the field of railways, in particular.

On the other hand, although a phosphorus-based flame retardant and a metal hydroxide do not have the aforementioned problem of smoke generation, it is necessary to add a large amount of phosphorus-based flame retardant or metal hydroxide to rubber to cause a flame-retardant effect to be expressed due to the poor flame-retardant effect of these, and this often leads to degradation of durability of the rubber. Moreover, the phosphorus-based flame retardant and metal hydroxide are likely to serve as starting points of rubber breakage since a phosphorus-based flame retardant and a metal hydroxide have little interaction with the rubber and typically have large particle diameters, and there is a concern of physical properties of the rubber such as tensile strength being degraded.

Also, there is a concern that an antimony compound will adversely affect the low dynamic-to-static modulus ratio, which is a vibration isolation property of the vibration isolation rubber member.

As described above, it is significantly difficult to enhance the flame-retardant effect without causing the problem of smoke generation and the problem of degradation of physical properties of vibration isolation rubber in practice.

The present invention was made in view of such circumstances and provides a flame-retardant vibration isolation rubber composition and a flame-retardant vibration isolation rubber member with excellent flame retardancy and a smoke generation inhibiting property without degrading a vibration isolation property and physical properties of rubber.

The present inventor continued intensive studies for solving the aforementioned problem. In the process of the studies, the present inventor discovered that it was possible to enhance a flame-retardant effect without causing the problem of smoke generation and the problem of degradation of physical properties of vibration isolation rubber by causing (A) a diene-based rubber to contain (C) a metal molybdate compound in addition to (B) a halogen-based flame retardant and (D) a metal hydroxide.

In other words, if each of these materials is caused to be contained in the combination as described above, strong carbide is formed on the surface of the rubber during combustion of the rubber, heat and oxygen are effectively blocked therefrom, and combustion spreading and smoke generation are thus inhibited. It is thus possible to solve the aforementioned problems observed when only (B) the halogen-based flame retardant and (D) the metal hydroxide are used. Also, an advantageous effect of (C) the metal molybdate compound that it affects crosslinking of the rubber and contributes to a low dynamic-to-static modulus ratio without degrading the physical properties such as the tensile strength of the rubber is also observed.

The subject matter of the present invention is defined in the appended set of claims.

As described above, the flame-retardant vibration isolation rubber composition according to the present invention can exhibit properties of excellent flame retardancy and a smoke generation inhibiting property while having properties such as a vibration isolation property and physical properties of rubber required for vibration isolation rubber.

Next, an embodiment of the present invention will be described in detail.

A flame-retardant vibration isolation rubber composition according to the present invention includes the following ingredient (A) as a rubber component and the following ingredients (B) to (D) as described above and a 12-hydroxystearic acid compound as ingredient (E). The rubber components included in the flame-retardant vibration isolation rubber composition according to the present invention are preferably only the following ingredient (A). Hereinafter, each component included in the flame-retardant vibration isolation rubber composition according to the present invention will be described in detail.
(A) a diene-based rubber
(B) a halogen-based flame retardant
(C) a metal molybdate compound
(D) a metal hydroxide
(E) a 12-hydroxystearic acid compound

### [(A) Diene-based rubber]

Examples of the (A) diene-based rubber include natural rubber (NR), isoprene rubber (IR), butadiene rubber (BR), styrene-butadiene rubber (SBR), acrylonitrile-butadiene rubber (NBR), and ethylene-propylene-diene-based rubber (EPDM). One of these is used alone, or two or more of these are used in combination. Among these, natural rubber is suitably used in terms of strength and a low dynamic-to-static modulus ratio.

### [(B) Halogen-based flame retardant]

Although the aforementioned (B) halogen-based flame retardant is not particularly limited, a halogen-based flame retardant with a melting point of 150°C or less is preferably used, and a halogen-based flame retardant with a melting point of 120°C or less is more preferably used since there is no concern of degradation of the physical properties of the rubber. Examples of the halogen-based flame retardant includes a bromine-based flame retardant and a basic flame retardant. One of these is used alone, or two or more of these are used in combination. Among these, the bromine-based flame retardant having a low melting point as described above is particularly preferably used.

Examples of bromine-based flame retardant that are preferably used include aliphatic bromine-based flame retardants such as
bis(dibromopropylether)tetrabromobisphenol A (DBP-TBBA),
bis(dibromopropylether)tetrabromobisphenol S (DBP-TBBS),
tris(dibromopropyl)isocyanurate (TDBPIC), tris(tribromoneopentyl)phosphate (TTBNPP) and aromatic bromine-based flame retardants such as a brominated epoxy resin (TBBA epoxy).

Also, examples of the basic flame retardant that is preferably used include chlorinated paraffin and chlorinated polyethylene since they have low melting points.

The content ratio of the (B) halogen-based flame retardant preferably ranges from 5 to 40 parts by weight and more preferably ranges from 10 to 30 parts by weight with respect to 100 parts by weight of the (A) diene-based rubber. In other words, this is because a desired flame-retardant effect and the like cannot be obtained if the content ratio of the (B) halogen-based flame retardant is too small and black smoke is generated through combustion and degradation of physical properties of rubber is caused if the content ratio of the (B) halogen-based flame retardant is too large.

### [(C) Metal molybdate compound]

In the present invention, the "metal molybdate compound" is intended to include a metal molybdate compound itself and also a metal molybdate compound carried on surfaces of inorganic particles. The metal molybdate compound carried by the surfaces of inorganic particles as described above is particularly preferably used since it is possible to efficiently enhance flame retardancy and a smoke generation inhibiting effect achieved by the metal molybdate compound due to large particle surface areas.

Examples of the metal molybdate compound include zinc molybdate, calcium molybdate, ammonium molybdate, sodium molybdate, and molybdenum trioxide. One of these is used alone, or two or more of these are used in combination. Among these, zinc molybdate is preferably used since it is possible to more efficiently enhance the flame retardancy and the smoke generation inhibiting effect.

Examples of the inorganic particles include inorganic particles made of magnesium hydroxide, calcium carbonate, zinc oxide, talc, silica, mica, kaolin, clay, sericite, montmorillonite, magnesium silicate, and zinc borate. One of these is used alone, or two or more of these are used in combination. Among these, inorganic particles made of at least one selected from a group consisting of magnesium hydroxide, calcium carbonate, zinc oxide, talc, silica, mica, kaolin, clay, sericite, and montmorillonite are preferably used since it is possible to more efficiently enhance the flame retardancy and the smoke generation inhibiting effect when the surfaces of the aforementioned inorganic particles are caused to carry the metal molybdate compound. More preferably, inorganic particles made of at least one selected from a group consisting of calcium carbonate, zinc oxide, and magnesium hydroxide are used.

Note that as the metal molybdate compound that the inorganic particles are caused to carry on their surfaces, metal molybdate compounds similar to those as described above are used. Also, zinc molybdate carried on the surfaces of the aforementioned inorganic particles is particularly preferably used since it is possible to more efficiently enhance the flame retardancy and the smoke generation inhibiting effect.

Also, an average particle diameter of the inorganic particles carrying the metal molybdate compound as described above is preferably 0.1 to 10 µm and more preferably ranges from 0.1 to 5 µm. In other words, this is because such an average particle diameter can more efficiently enhance the flame retardancy and the smoke generation inhibiting effect without causing deterioration in the physical properties of the rubber. Note that the aforementioned average particle diameter is a volume average particle diameter and can be derived by using a sample arbitrarily extracted from a population and performing measurement using a laser diffraction scattering particle size distribution measurement instrument, for example. Also, the average particle diameters of metal molybdate compounds used in examples, which will be described later, were also measured in this manner.

The content ratio of the (C) metal molybdate compound preferably ranges from 1 to 30 parts by weight with respect to 100 parts by weight of the (A) diene-based rubber. Also, in a case in which the (C) metal molybdate compound is a metal molybdate compound itself, the content ratio more preferably ranges from 1 to 20 parts by weight and further preferably ranges from 2 to 10 parts by weight with respect to 100 parts by weight of the (A) diene-based rubber. In addition, in a case in which the (C) metal molybdate compound is inorganic particles carrying a metal molybdate compound, the content ratio more preferably ranges from 3 to 30 parts by weight and further preferably ranges from 5 to 10 parts by weight with respect to 100 parts by weight of the (A) diene-based rubber.

In other words, this is because a desired flame-retardant effect cannot be obtained if the content ratio of the (C) metal molybdate compound is too low and there is a concern that degradation of physical properties of rubber will be caused if the content ratio of the (C) metal molybdate compound is too high.

Note that the content ratio of the (C) metal molybdate compound in the flame-retardant vibration isolation rubber composition according to the present invention is preferably lower than that of the (D) metal hydroxide described below in terms of durability.

### [(D) Metal hydroxide]

As the (D) metal hydroxide, one of aluminum hydroxide, magnesium hydroxide, calcium hydroxide, sodium hydroxide, or tin hydroxide, for example is used alone, or two or more kinds of these are used in combination. Among these, aluminum hydroxide and magnesium hydroxide are preferably used due to allowing excellent flame retardancy and smoke generation inhibiting properties.

The average particle diameter of the (D) metal hydroxide typically ranges from 0.5 to 2 µm. Also, if the average particle diameter of the (D) metal hydroxide is small (an average particle diameter of 0.75 µm or less), there is an advantage that there is no concern that degradation of physical properties of rubber will be caused due to the particle diameter. Note that the aforementioned average particle diameter is also a volume average particle diameter and can be derived by using a sample arbitrarily extracted from a population and performing measurement using a laser diffraction scattering particle size distribution measurement instrument, for example. Also, the average particle diameters of metal hydroxides used in the examples, which will be described later, were also measured in this manner.

The content ratio of the (D) metal hydroxide preferably ranges 40 to 120 parts by weight, more preferably ranges from 40 to 90 parts by weight, and further preferably ranges from 60 to 90 parts by weight with respect to 100 parts by weight of the (A) diene-based rubber. In other words, this is because there is a concern that a desired flame-retardant effect cannot be obtained if the content ratio of the (D) metal hydroxide is too low and degradation of physical properties of rubber is caused if the content ratio of the (D) metal hydroxide is too high.

Note that it is also possible to appropriately blend a reinforcing agent, a silane coupling agent, a vulcanizing agent, a vulcanization accelerator, a vulcanization aid, an anti-aging agent, a process oil, and the like into the flame-retardant vibration isolation rubber composition according to the present invention if needed in addition to the aforementioned ingredients (A) to (E). Note that although blending in of an antimony-based flame retardant such as antimony trioxide is not excluded from the present invention since the blending in thereof is preferable for enhancing the flame-retardant effect, it is desirable not to blend an antimony-based flame retardant into the flame-retardant vibration isolation rubber composition according to the present invention since there is also a concern of adverse effects on the vibration isolation properties and the physical properties of rubber.

The (E) 12-hydroxystearic acid compound has an effect of promoting dispersion of the (D) metal hydroxide and the (C) metal molybdate compound at the time of high-temperature melting of the rubber composition and of improving the flame retardancy.

Examples of the aforementioned (E) 12-hydroxystearic acid compound include zinc 12-hydroxystearate, calcium 12-hydroxystearate, lithium 12-hydroxystearate, aluminum 12-hydroxystearate, and magnesium 12-hydroxystearate. One of these is used alone, or two or more of these are used in combination. Among these, zinc 12-hydroxystearate is preferably used since a zinc portion captures an active radical of the (A) diene-based rubber and stably inhibits generation of combustion gas and can further enhance the smoke generation inhibiting effect.

The content ratio of the (E) 12-hydroxystearic acid compound preferably ranges from 0.5 to 10 parts by weight, more preferably ranges from 0.5 to 3 parts by weight, and further preferably ranges from 1 to 3 parts by weight with respect to 100 parts by weight of the (A) diene-based rubber. In other words, this is because satisfactory dispersibility of the (B) halogen-based flame retardant is achieved without inhibiting physical properties of rubber and the smoke generation inhibiting effect can be further enhanced if the (E) 12-hydroxystearic acid compound is caused to be contained at such a rate.

Examples of the reinforcing agent includes carbon black, silica, and talc. One of these is used alone, or two or more of these are used in combination.

The content ratio of the reinforcing agent preferably ranges from 10 to 100 parts by weight and particularly preferably ranges from 20 to 70 parts by weight with respect to 100 parts by weight of the (A) diene-based rubber. In other words, this is because having a reinforcing property at a certain level cannot be satisfied if the content ratio is too low and in contrast, problems such as a high dynamic-to-static modulus ratio and an increase in viscosity and thus degradation of workability occur if the content ratio is too high.

Note that the (D) metal hydroxide is preferably processed with the silane coupling agent since workability at the time of kneading is enhanced and physical properties of rubber are improved.

Examples of the vulcanizing agent include sulfur (powdered sulfur, precipitated sulfur, insoluble sulfur). One of these is used alone, or two or more of these are used in combination.

The content ratio of the vulcanizing agent preferably ranges from 0.3 to 7 parts by weight and particularly preferably ranges from 1 to 5 parts by weight with respect to 100 parts by weight of the (A) diene-based rubber. In other words, this is because a sufficient crosslinking structure cannot be obtained and trends of degradation of a dynamic-to-static modulus ratio and settling resistance are observed if the content ratio of the vulcanizing agent is too low and a trend of a decrease in heat resistance is observed if the content ratio of the vulcanizing agent is too high on the contrary.

Examples of the vulcanization accelerator include a thiazole-based vulcanization accelerator, a sulfenamide-based vulcanization accelerator, a thiuram-based vulcanization accelerator, an aldehyde ammonia-based vulcanization accelerator, an aldehyde amine-based vulcanization accelerator, a guanidine-based vulcanization accelerator, and a thiourea-based vulcanization accelerator. One of these is used alone, or two or more of these are used in combination. Among these, a sulfenamide-based vulcanization accelerator is preferably used in terms of excellent crosslinking reactivity.

Also, the content ratio of the vulcanization accelerator preferably ranges from 0.5 to 7 parts by weight and particularly preferably ranges from 0.5 to 5 parts by weight with respect to 100 parts by weight of the (A) diene-based rubber.

Examples of the thiazole-based vulcanization accelerator include dibenzothiazyldisulfide (MBTS), 2-mercaptobenzothiazole (MBT), 2-mercaptobenzothiazole sodium salt (NaMBT), and 2-mercaptobenzothiazole zinc salt (ZnMBT). One of these is used alone, and two or more of these are used in combination. Among these, dibenzothiazyldisulfide (MBTS) and 2-mercaptobenzothiazole (MBT) are particularly suitably used in terms of excellent crosslinking reactivity.

Examples of the sulfenamide-based vulcanization accelerator include
N-oxydiethylene-2-benzothiazolylsulfenamide (NOBS),
N-cyclohexyl-2-benzothiazolylsulfenamide (CBS),
N-t-butyl-2-benzothiazolesulfenamide (BBS), and
N,N'-dicyclohexyl-2-benzothiazolesulfenamide.

Examples of the thiuram-based vulcanization accelerator include tetramethylthiuramdisulfide (TMTD), tetraethylthiuramdisulfide (TETD), tetrabutylthiuramdisulfide (TBTD), tetrakis(2-ethylhexyl)thiuramdisulfide (TOT), and tetrabenzylthiuramdisulfide (TBzTD).

Examples of the vulcanization aid include flowers of zinc (ZnO), a stearic acid, and magnesium oxide. One of these is used alone, or two or more of these are used in combination.

Also, the content ratio of the vulcanization aid preferably ranges from 1 to 25 parts by weight and particularly preferably ranges from 3 to 10 parts by weight with respect to 100 parts by weight of the (A) diene-based rubber.

Examples of the anti-aging agent include an amine-based anti-aging agent, a carbamate-based anti-aging agent, a phenylenediamine-based anti-aging agent, a phenol-based anti-aging agent, a diphenylamine-based anti-aging agent, a quinoline-based anti-aging agent, an imidazole-based anti-aging agent, and a wax. One of these is used alone, or two or more of these are used in combination.

Also, the content ratio of the anti-aging agent preferably ranges from 1 to 10 parts by weight and particularly preferably ranges from 1 to 5 parts by weight with respect to 100 parts by weight of the (A) diene-based rubber.

Examples of the process oil include a naphthene-based oil, a paraffin-based oil, and an aroma-based oil. One of these is used alone, or two or more of these are used in combination.

Also, the content ratio of the process oil preferably ranges from 1 to 50 parts by weight and particularly preferably ranges from 3 to 30 parts by weight with respect to 100 parts by weight of the (A) diene-based rubber.

The flame-retardant vibration isolation rubber composition according to the present invention can be prepared as follows, for example. In other words, the ingredients (A) to (E) are blended, the reinforcing agent, the silane coupling agent, and the anti-aging agent, the process oil, and the like are further blended in if needed, kneading of these is started from a temperature of about 50°C using a Banbury mixer or the like, and the kneading is performed at 100 to 160°C for about 3 to 5 minutes. Next, a vulcanizer, a vulcanization accelerator, and the like are appropriately blended thereinto, and kneading is performed under predetermined conditions (60°C × 5 minutes, for example) using an open roll, thereby preparing a flame-retardant vibration isolation rubber composition. Thereafter, the thus obtained flame-retardant vibration isolation rubber composition is vulcanized at a high temperature (150 to 170°C) for 5 to 60 minutes, thereby obtaining a flame-retardant vibration isolation rubber member (vulcanized body).

According to the flame-retardant vibration isolation rubber composition of the present invention, it is possible to obtain excellent effects of flame retardancy and a smoke generation inhibiting property without degrading vibration isolation properties and physical properties of rubber. Thus, the flame-retardant vibration isolation rubber composition according to the present invention can be suitably used as a material for a vibration isolation rubber member required to have flame retardancy, for example, a vibration isolation member used in a vehicle such as a train or an automobile (a rubber bush, a rubber buffer, a conical member, a chevron, cylindrical lamination rubber, an engine mount, a stabilizer bush, a suspension bush, or the like) or a vibration isolation rubber member in the fields of architecture and housing. Particularly, it is possible to effectively use the flame-retardant vibration isolation rubber composition in utilization in the field of railways such as trains, in which smoke generation (generation of black smoke) during combustion is considered as a problem.

### Examples

Next, examples will be described in addition to comparative examples.

First, the following materials were prepared before starting the examples and the comparative examples.

### [NR (ingredient A)

Natural rubber

### [Halogen-based flame retardant (ingredient B)]

Bromine-based flame retardant (FCP680G manufactured by Suzuhiro Chemical Co., Ltd.) with a melting point of 105 to 115°C

### [Metal molybdate compound (i) (ingredient C)]

Compound in which zinc molybdate is carried on surfaces of particles made of calcium carbonate and zinc oxide (Kemgard 911A (average particle diameter: 2.7 µm, specific gravity: 3.0) manufactured by Huber)

### [Metal molybdate compound (ii) (ingredient C)]

Compound in which zinc molybdate is carried on surfaces of zinc oxide particles (Kemgard 911B (average particle diameter: 2.3 µm, specific gravity: 5.1) manufactured by Huber)

### [Metal molybdate compound (iii) (ingredient C)]

Compound in which zinc molybdate is carried on surfaces of magnesium silicate particles (Kemgard 911C (average particle diameter: 3.3 µm, specific gravity: 2.8) manufactured by Huber)

### [Metal molybdate compound (iv) (ingredient C)]

Compound in which zinc molybdate is carried on surfaces of magnesium hydroxide particles (Kemgard HPSS (average particle diameter: 2.0 µm, specific gravity: 3.5) manufactured by Huber)

### [Metal molybdate compound (v) (ingredient C)]

Compound in which zinc molybdate is carried on surfaces of magnesium hydroxide particles (Kemgard MZM (average particle diameter: 2.0 µm, specific gravity: 2.6) manufactured by Huber)

### [Metal molybdate compound (vi) (ingredient C)]

Ammonium molybdate (TF-2000 manufactured by Nippon Inorganic Colour and Chemical Co., Ltd.)

### [Metal hydroxide (ingredient D)]

Aluminum hydroxide (KH-101 (average particle diameter: 1.0 µm) manufactured by KC)

### [12-hydroxystearic acid compound (ingredient E)]

Zinc 12-hydroxystearate (SZ-120H manufactured by Sakai Chemical Industry Co., Ltd.)

### [Antimony trioxide]

PATOX-MF manufactured by Nihon Seiko Co., Ltd.

### [ZnO]

Flowers of zinc

### [Stearic acid]

Bead stearic acid Sakura manufactured by NOF Corporation

### [Amine-based anti-aging agent]

Ozonone 6C manufactured by Seiko Chemical Co., Ltd.

### [Wax]

Microcrystalline wax (Sunnocc manufactured by Ouchi Shinko Chemical Industrial Co., Ltd.)

### [Carbon black]

GPF-class carbon black (Seast V manufactured by Tokai Carbon Co., Ltd.)

### [Silica]

Wet silica (Nipsil VN3 manufactured by Tosoh Silica Corporation)

### [Naphthene oil]

Sunthene 410 manufactured by Japan Sun Oil Company, Ltd.

### [Vulcanization accelerator]

Sulfenamide-based vulcanization accelerator (Nocceler CZ-G manufactured by Ouchi Shinko Chemical Industrial Co., Ltd.)

### [Sulfur]

Manufactured by Karuizawa Seiren-sho K.K.

### [Examples 1 to 12 and Comparative Examples 1 to 4]

Each of the aforementioned materials was blended in at the rates shown in Tables 1 and 2 below and kneading was performed, thereby preparing vibration isolation rubber compositions. Note that the kneading was performed by kneading materials other than the sulfur and the vulcanization accelerator at 140°C for 5 minutes using a Banbury mixer first, then blending in the sulfur and the vulcanization accelerator, and kneading the materials at 60°C for 5 minutes using an open roll.

The thus obtained vibration isolation rubber compositions in the examples and the comparative examples were used to carry out evaluation of each property in accordance with the following criteria. The results are shown in Tables 1 and 2 below.

### <Tensile strength>

Each vibration isolation rubber composition was press-molded (vulcanized) under conditions of 150°C × 20 minutes, thereby producing a rubber sheet with a thickness of 2 mm. Then, a JIS No. 5 dumbbell was punched from the rubber sheet, and tensile strength (tension strength) was measured in accordance with JIS K6251.

Note that Tables 1 and 2 below show index conversion values of measurement values (MPa) of the tensile strength in each of the examples and the comparative examples when the measurement value (MPa) of the tensile strength in Comparative Example 1 is defined as 100.

Also, the results were evaluated as "Good" when the aforementioned values were equal to or greater than 100 and were evaluated as "Bad" when the aforementioned values were less than 100.

### <Dynamic-to-static modulus ratio (vibration isolation performance).

Each vibration isolation rubber composition was press-molded (vulcanized) under conditions of 150°C × 30 minutes to produce a test piece with a columnar shape (a diameter of 50 mm and a height of 25 mm), circular metal tools (a diameter of 60 mm and a thickness of 6 mm) were attached to the upper surface and the lower surface, and a dynamic spring constant (Kd100) and a static spring constant (Ks) were measured in accordance with JIS K6394. A dynamic-to-static modulus ratio (Kd100/Ks) was calculated on the basis of the values.

Note that Tables 1 and 2 below show index conversion values of the measurement values of the dynamic-to-static modulus ratios in the examples and the comparative examples when the measurement value of the dynamic-to-static modulus ratio (Kd100/Ks) in Comparative Example 1 was defined as 100.

Then, the results were evaluated as "Good" when the aforementioned values were less than 95, were evaluated as "Fair" when the aforementioned values were equal to or greater than 95 and less than 100, and were evaluated as "Bad" when the aforementioned values were equal to or greater than 100.

### <Number of times to rupture>

Each vibration isolation rubber composition was press-molded (vulcanized) under conditions of 150°C × 20 minutes, thereby producing a rubber sheet with a thickness of 2 mm. Then, a JIS No. 3 dumbbell was punched from the rubber sheet, and the dumbbell was used to perform a dumbbell fatigue test (stretch test) in accordance with JIS K6260 and measure the number of times of stretching to rupture (number of times to rupture).

Note that Tables 1 and 2 below show index conversion values of the number of times to rupture in the examples and the comparative examples when the number of times to rupture in Comparative Example 1 was defined as 100.

Also, the results were evaluated as "Good" when the aforementioned values were more than 120, were evaluated as "Fair" when the aforementioned values were more than 100 and equal to or less than 120, and were evaluated as "Bad" when the aforementioned values were equal to or less than 100.

### <Oxygen index>

Each vibration isolation rubber composition was press-molded (vulcanized) under conditions of 150°C × 20 minutes, thereby producing a rubber sheet with a thickness of 2 mm. Then, in order to evaluate flame retardancy of the rubber sheet, a minimum oxygen concentration (volume %) required to continue combustion of the rubber sheet was measured in accordance with JIS K7201.

Note that Tables 1 and 2 below show index conversion values of the minimum oxygen concentrations (volume %) in the examples and the comparative examples when the minimum oxygen concentration (volume %) in Comparative Example 1 was defined as 100.

Then, the results were evaluated as "Good" when the aforementioned values were equal to or greater than 100, were evaluated as "Fair" when the aforementioned values were more than 90 and less than 100, and were evaluated as "Bad" when the aforementioned values were equal to or less than 90.

### <Smoke generation inhibiting property>

Each vibration isolation rubber composition was press-molded (vulcanized) under conditions of 150°C × 60 minutes, thereby producing a rubber block with a side of 76.2 mm and a thickness of 25.4 mm. Then, light transmittance of smoke generated during combustion of the rubber block, that is, a Ds value (specific optical density) of smoke 4 minutes later than start of heating in a non-flaming or flaming test was measured in accordance with ASTM E662.

Note that Tables 1 and 2 below show index conversion values of the Ds values (specific optical densities) in the examples and the comparative examples when the Ds value (specific optical density) in Comparative Example 1 was defined as 100.

Then, the results were evaluated as "Good" when the aforementioned values were less than 100, were evaluated as "Fair" when the aforementioned values were equal to or greater than 100 and less than 130, and were evaluated as "Bad" when the aforementioned values were equal to or greater than 130.

**[Table 1]**

| | | Examples (* Reference Examples) | | | | | | | | | | | |
|---|---|---|---|---|---|---|---|---|---|---|---|---|---|
| | | 1* | 2* | 3* | 4* | 5* | 6* | 7* | 8* | 9 | 10 | 11* | 12* |
| NR | | 100 | 100 | 100 | 100 | 100 | 100 | 100 | 100 | 100 | 100 | 100 | 100 |
| Halogen-based flame retardant | | 20 | 20 | 20 | 20 | 20 | 20 | 10 | 30 | 20 | 20 | 20 | 20 |
| Metal molybdate compound | i | 10 | - | - | - | - | - | - | - | - | - | - | - |
| | ii | 10 | 10 | - | - | - | - | - | - | - | - | - | - |
| | iii | - | - | 10 | - | - | - | - | - | - | - | - | - |
| | iv | - | - | - | 10 | - | - | - | - | - | - | - | - |
| | v | - | - | - | - | 10 | 5 | 10 | 10 | 10 | 10 | 10 | - |
| | vi | - | - | - | - | - | - | - | - | - | - | - | 10 |
| Metal hydroxide | | 90 | 90 | 90 | 90 | 90 | 90 | 90 | 90 | 90 | 90 | 40 | 90 |
| 12-hydroxystearic acid compound | | - | - | - | - | - | - | - | - | 1 | 3 | - | - |
| Antimony trioxide | | - | - | - | - | - | - | - | - | - | - | - | - |
| ZnO | | 5.0 | 5.0 | 5.0 | 5.0 | 5.0 | 5.0 | 5.0 | 5.0 | 5.0 | 5.0 | 5.0 | 5.0 |
| Stearic acid | | 2.0 | 2.0 | 2.0 | 2.0 | 2.0 | 2.0 | 2.0 | 2.0 | 2.0 | 2.0 | 2.0 | 2.0 |
| Amine-based anti-aging agent | | 1.5 | 1.5 | 1.5 | 1.5 | 1.5 | 1.5 | 1.5 | 1.5 | 1.5 | 1.5 | 1.5 | 1.5 |
| Wax | | 2.0 | 2.0 | 2.0 | 2.0 | 2.0 | 2.0 | 2.0 | 2.0 | 2.0 | 2.0 | 2.0 | 2.0 |
| Carbon black | | 10 | 10 | 10 | 10 | 10 | 10 | 10 | 10 | 10 | 10 | 10 | 10 |
| Silica | | 20 | 20 | 20 | 20 | 20 | 20 | 20 | 20 | 20 | 20 | 20 | 20 |
| Naphthene oil | | 5.0 | 5.0 | 5.0 | 5.0 | 5.0 | 5.0 | 5.0 | 5.0 | 5.0 | 5.0 | 5.0 | 5.0 |
| Vulcanization accelerator | | 1.2 | 1.2 | 1.2 | 1.2 | 1.2 | 1.2 | 1.2 | 1.2 | 1.2 | 1.2 | 1.2 | 1.2 |
| Sulfur | | 2.3 | 2.3 | 2.3 | 2.3 | 2.3 | 2.3 | 2.3 | 2.3 | 2.3 | 2.3 | 2.3 | 2.3 |
| Tensile strength (index) | | 113 | 119 | 120 | 119 | 119 | 120 | 115 | 100 | 125 | 131 | 140 | 110 |
| Evaluation | | Good | Good | Good | Good | Good | Good | Good | Good | Good | Good | Good | Good |
| Dynamic-to-static modulus ratio (index) | | 74 | 83 | 93 | 93 | 89 | 93 | 87 | 91 | 89 | 94 | 71 | 95 |
| Evaluation | | Good | Good | Good | Good | Good | Good | Good | Good | Good | Good | Good | Fair |
| Number of times to rupture (index) | | 125 | 175 | 125 | 125 | 138 | 165 | 145 | 120 | 138 | 138 | 180 | 115 |
| Evaluation | | Good | Good | Good | Good | Good | Good | Good | Fair | Good | Good | Good | Fair |
| Oxygen index (index) | | 100 | 100 | 100 | 100 | 100 | 100 | 96 | 106 | 100 | 100 | 94 | 100 |
| Evaluation | | Good | Good | Good | Good | Good | Good | Fair | Good | Good | Good | Fair | Good |
| Smoke generation inhibiting property (index) | | 98 | 97 | 129 | 89 | 87 | 92 | 69 | 98 | 84 | 71 | 99 | 92 |
| Evaluation | | Good | Good | Fair | Good | Good | Good | Good | Good | Good | Good | Good | Good |

**[Table 2]**

| | | Comparative Examples | | | |
|---|---|---|---|---|---|
| | | 1 | 2 | 3 | 4 |
| NR | | 100 | 100 | 100 | 100 |
| Halogen-based flame retardant | | 20 | 20 | - | - |
| Metal molybdate compound | i | - | - | - | - |
| | ii | - | - | - | - |
| | iii | - | - | - | - |
| | iv | - | - | - | - |
| | v | - | - | - | - |
| | vi | - | - | - | - |
| Metal hydroxide | | 90 | 90 | 90 | 120 |
| 12-hydroxystearic acid compound | | - | - | - | - |
| Antimony trioxide | | 8 | - | - | - |
| ZnO | | 5.0 | 5.0 | 5.0 | 5.0 |
| Stearic acid | | 2.0 | 2.0 | 2.0 | 2.0 |
| Amine-based anti-aging agent | | 1.5 | 1.5 | 1.5 | 1.5 |
| Wax | | 2.0 | 2.0 | 2.0 | 2.0 |
| Carbon black | | 10 | 10 | 10 | 10 |
| Silica | | 20 | 20 | 20 | 20 |
| Naphthene oil | | 5.0 | 5.0 | 5.0 | 5.0 |
| Vulcanization accelerator | | 1.2 | 1.2 | 1.2 | 1.2 |
| Sulfur | | 2.3 | 2.3 | 2.3 | 2.3 |
| Tensile strength (index) | | 100 | 103 | 103 | 80 |
| Evaluation | | Good | Good | Good | Fair |
| Dynamic-to-static modulus ratio (index) | | 100 | 97 | 92 | 140 |
| Evaluation | | Bad | Fair | Good | Bad |
| Number of times to rupture (index) | | 100 | 117 | 120 | 30 |
| Evaluation | | Bad | Fair | Fair | Bad |
| Oxygen index (index) | | 100 | 90 | 82 | 100 |
| Evaluation | | Good | Bad | Bad | Good |
| Smoke generation inhibiting property (index) | | 100 | 95 | 81 | 50 |
| Evaluation | | Fair | Good | Good | Good |

It was possible to recognize from the results in Tables 1 and 2 above that the vibration isolation rubber composition in the examples had excellent vibration isolation properties due to their low dynamic-to-static modulus ratios, had high indexes indicating physical properties of rubber such as tensile strength and numbers of times to rapture, further had high oxygen indexes that is indexes indicating flame retardancy, and had excellent smoke generation inhibiting properties.

On the other hand, it was possible to recognize that although the rubber composition in Comparative Example 1 had improved flame retardancy through the addition of antimony trioxide along with the halogen-based flame retardant and the metal hydroxide, the rubber composition had a degraded vibration isolation property due to its high dynamic-to-static modulus ratio, had a small number of times to rupture, and thus had degraded rupture durability in a dumbbell fatigue test.

From the rubber composition in Comparative Example 2, sufficient flame retardancy was not able to be obtained merely from the flame-retardant effects of the halogen-based flame retardant and the metal hydroxide, and a result of a low oxygen index was achieved as an index of flame retardancy.

From the rubber composition in Comparative Example 3, sufficient flame retardancy was not able to be obtained merely from the flame-retardant effect of the metal hydroxide, and a result of a low oxygen index than that in Comparative Example 2 was obtained. However, a satisfactory smoke generation inhibiting property was achieved since no halogen-based flame retardant was contained.

The rubber composition in Comparative Example 4 was obtained by causing metal hydroxide to be contained such that an oxygen index equivalent to that of the rubber composition in Comparative Example 1 was achieved without addition of antimony trioxide, however, degradation of indexes indicating physical properties of rubber such as a high dynamic-to-static modulus ratio, a tensile strength, and the number of times to rapture was also observed.

Note that specific forms of the present invention have been described in the aforementioned examples, the examples have been provided only for illustrative purposes and are not to be interpreted in a limited manner. A variety of modifications that are obvious for those skilled in the art are intended to be encompassed within the scope of the present invention.

According to the flame-retardant vibration isolation rubber composition of the present invention, it is possible to obtain excellent effects of flame retardancy and a smoke generation inhibiting property without degrading a vibration isolation property and physical properties of rubber. Therefore, the flame-retardant vibration isolation rubber composition according to the present invention can be suitably used as a material for a vibration isolation rubber member required to have flame retardancy, for example, a vibration isolation member used in a vehicle such as a train or an automobile (a rubber bush, a rubber buffer, a conical member, a chevron, a cylindrical lamination rubber, an engine mount, a stabilizer bush, a suspension bush, or the like) or a vibration isolation rubber member in the fields of architecture and housing. Particularly, it is possible to effectively use the flame-retardant vibration isolation rubber composition in utilization in the field of railways such as trains, in which smoke generation (generation of black smoke) during combustion is considered as a problem.

## Claims

1. A flame-retardant vibration isolation rubber composition comprising:
the following ingredient (A) as a rubber component; and
the following ingredients (B) to (D), wherein
(A) is diene-based rubber,
(B) is a halogen-based flame retardant,
(C) is a metal molybdate compound, and
(D) is a metal hydroxide, and
further comprising:
a 12-hydroxystearic acid compound as ingredient (E).

2. The flame-retardant vibration isolation rubber composition according to claim 1, wherein a content ratio of the halogen-based flame retardant (B) ranges from 5 to 40 parts by weight with respect to 100 parts by weight of the diene-based rubber (A).

3. The flame-retardant vibration isolation rubber composition according to claim 1 or 2, wherein a content ratio of the metal hydroxide (D) ranges from 40 to 120 parts by weight with respect to 100 parts by weight of the diene-based rubber (A).

4. The flame-retardant vibration isolation rubber composition any one of claims 1 to 3, wherein a content ratio of the metal molybdate compound (C) in the flame-retardant vibration isolation rubber composition is smaller than a content ratio of (D) the metal hydroxide.

5. The flame-retardant vibration isolation rubber composition according to any one of claims 1 to 4, wherein a content ratio of the metal molybdate compound (C) ranges from 1 to 30 parts by weight with respect to 100 parts by weight of the diene-based rubber (A).

6. The flame-retardant vibration isolation rubber composition according to any one of claims 1 to 5, wherein the metal molybdate compound (C) is a compound in which a metal molybdate compound is carried on surfaces of the following (X), where
(X) is particles of at least one selected from a group consisting of magnesium hydroxide, calcium carbonate, zinc oxide, talc, silica, mica, kaolin, clay, sericite, and montmorillonite.

7. The flame-retardant vibration isolation rubber composition according to claim 6, wherein the metal molybdate compound is zinc molybdate.

8. The flame-retardant vibration isolation rubber composition according to any one of claims 1 to 7, wherein the 12-hydroxystearic acid compound (E) is zinc 12-hydroxystearate.

9. The flame-retardant vibration isolation rubber composition according to any one of claims 1 to 8, wherein a content ratio of the 12-hydroxystearic acid compound (E) ranges from 0.5 to 10 parts by weight with respect to 100 parts by weight of the diene-based rubber (A).

10. The flame-retardant vibration isolation rubber composition according to any one of claims 1 to 9, wherein the metal hydroxide (D) is at least one selected from aluminum hydroxide and magnesium hydroxide.

11. The flame-retardant vibration isolation rubber composition according to any one of claims 1 to 10, wherein the halogen-based flame retardant (B) is a halogen-based flame retardant with a melting point of 150°C or less.

12. A flame-retardant vibration isolation rubber member comprising:
a vulcanized body of the flame-retardant vibration isolation rubber composition according to any one of claims 1 to 11.

## Patentansprüche

1. Flammhemmende schwingungsisolierende Gummizusammensetzung, umfassend:
den folgenden Bestandteil (A) als Kautschuk- bzw. Gummikomponente; und
die folgenden Bestandteile (B) bis (D), wobei
(A) Kautschuk bzw. Gummi auf Dienbasis ist,
(B) ein Flammschutzmittel auf Halogenbasis ist,
(C) eine Metallmolybdatverbindung ist und
(D) ein Metallhydroxid ist und
weiter umfassend:
eine 12-Hydroxystearinsäureverbindung als Bestandteil (E).

2. Flammhemmende, schwingungsisolierende Gummizusammensetzung nach Anspruch 1, wobei das Anteilsverhältnis des Flammschutzmittels auf Halogenbasis (B) im Bereich von 5 bis 40 Gewichtsteilen bezogen auf 100 Gewichtsteile des Gummis auf Dienbasis (A) liegt.

3. Flammhemmende, schwingungsisolierende Gummizusammensetzung nach Anspruch 1 oder 2, wobei ein Gehaltsverhältnis des Metallhydroxids (D) im Bereich von 40 bis 120 Gewichtsteilen bezogen auf 100 Gewichtsteile des Kautschuks auf Dienbasis (A) liegt.

4. Flammhemmende, schwingungsisolierende Kautschukzusammensetzung nach einem der Ansprüche 1 bis 3, wobei ein Gehaltsverhältnis der Metallmolybdatverbindung (C) in der flammhemmenden, schwingungsisolierenden Kautschukzusammensetzung geringer als ein Gehaltsverhältnis des Metallhydroxids (D) ist.

5. Flammhemmende, schwingungsisolierende Gummizusammensetzung nach einem der Ansprüche 1 bis 4, wobei ein Gehaltsverhältnis der Metallmolybdatverbindung (C) im Bereich von 1 bis 30 Gewichtsteilen bezogen auf 100 Gewichtsteile des Gummis auf Dienbasis (A) liegt.

6. Flammhemmende, schwingungsisolierende Gummizusammensetzung nach einem der Ansprüche 1 bis 5, wobei die Metallmolybdatverbindung (C) eine Verbindung ist, in der eine Metallmolybdatverbindung auf Oberflächen der folgenden (X) getragen wird, wobei
(X) Teilchen von mindestens einem, ausgewählt aus einer Gruppe, bestehend aus Magnesiumhydroxid, Calciumcarbonat, Zinkoxid, Talk, Siliciumdioxid, Glimmer, Kaolin, Ton, Serizit und Montmorillonit, ist.

7. Flammhemmende, schwingungsisolierende Gummizusammensetzung nach Anspruch 6, wobei die Metallmolybdatverbindung Zinkmolybdat ist.

8. Flammhemmende, schwingungsisolierende Gummizusammensetzung nach einem der Ansprüche 1 bis 7, wobei die 12-Hydroxystearinsäureverbindung (E) Zink-12-hydroxystearat ist.

9. Flammhemmende, schwingungsisolierende Gummizusammensetzung nach einem der Ansprüche 1 bis 8, wobei das Gehaltsverhältnis der 12-Hydroxystearinsäureverbindung (E) im Bereich von 0,5 bis 10 Gewichtsteilen bezogen auf 100 Gewichtsteile des Gummis auf Dienbasis (A) liegt.

10. Flammhemmende, schwingungsisolierende Gummizusammensetzung nach einem der Ansprüche 1 bis 9, wobei das Metallhydroxid (D) mindestens eines ist, ausgewählt aus Aluminiumhydroxid und Magnesiumhydroxid.

11. Flammhemmende, schwingungsisolierende Gummizusammensetzung nach einem der Ansprüche 1 bis 10, wobei das Flammschutzmittel auf Halogenbasis (B) ein Flammschutzmittel auf Halogenbasis mit einem Schmelzpunkt von 150°C oder weniger ist.

12. Flammhemmendes, schwingungsisolierendes Gummielement, umfassend:
einen vulkanisierten Körper aus der flammhemmenden, schwingungsisolierenden Gummizusammensetzung nach einem der Ansprüche 1 bis 11.

## Revendications

1. Composition de caoutchouc ignifuge à isolation de vibrations comprenant :
l'ingrédient suivant (A) en tant que composant de caoutchouc ; et
les ingrédients suivants (B) à (D), dans laquelle
(A) est un caoutchouc à base de diène,
(B) est un ignifuge à base d'halogène,
(C) est un composé de molybdate métallique, et
(D) est un hydroxyde métallique, et
comprenant en outre :
un composé d'acide 12-hydroxystéarique en tant qu'ingrédient (E).

2. Composition de caoutchouc ignifuge à isolation de vibrations selon la revendication 1, dans laquelle un rapport de teneur de l'ignifuge à base d'halogène (B) va de 5 à 40 parties en poids par rapport à 100 parties en poids du caoutchouc à base de diène (A).

3. Composition de caoutchouc ignifuge à isolation de vibrations selon la revendication 1 ou 2, dans laquelle un rapport de teneur de l'hydroxyde métallique (D) va de 40 à 120 parties en poids par rapport à 100 parties en poids du caoutchouc à base de diène (A).

4. Composition de caoutchouc ignifuge à isolation de vibrations selon l'une quelconque des revendications 1 à 3, dans laquelle un rapport de teneur du composé de molybdate métallique (C) dans la composition de caoutchouc ignifuge à isolation de vibrations est inférieur à un rapport de teneur de (D) l'hydroxyde métallique.

5. Composition de caoutchouc ignifuge à isolation de vibrations selon l'une quelconque des revendications 1 à 4, dans laquelle un rapport de teneur du composé de molybdate métallique (C) va de 1 à 30 parties en poids par rapport à 100 parties en poids du caoutchouc à base de diène (A).

6. Composition de caoutchouc ignifuge à isolation de vibrations selon l'une quelconque des revendications 1 à 5, dans laquelle le composé de molybdate métallique (C) est un composé dans lequel un composé de molybdate métallique est porté sur des surfaces du (X) suivant, où
(X) est des particules d'au moins un élément sélectionné parmi un groupe constitué d'hydroxyde de magnésium, de carbonate de calcium, d'oxyde de zinc, de talc, de silice, de mica, de kaolin, d'argile, de séricite, et de montmorillonite.

7. Composition de caoutchouc ignifuge à isolation de vibrations selon la revendication 6, dans laquelle le composé de molybdate métallique est du molybdate de zinc.

8. Composition de caoutchouc ignifuge à isolation de vibrations selon l'une quelconque des revendications 1 à 7, dans laquelle le composé d'acide 12-hydroxystéarique (E) est du 12-hydroxystéarate de zinc.

9. Composition de caoutchouc ignifuge à isolation de vibrations selon l'une quelconque des revendications 1 à 8, dans laquelle un rapport de teneur du composé d'acide 12-hydroxystéarique (E) va de 0,5 à 10 parties en poids par rapport à 100 parties en poids du caoutchouc à base de diène (A).

10. Composition de caoutchouc ignifuge à isolation de vibrations selon l'une quelconque des revendications 1 à 9, dans laquelle l'hydroxyde métallique (D) est au moins un sélectionné parmi l'hydroxyde d'aluminium et l'hydroxyde de magnésium.

11. Composition de caoutchouc ignifuge à isolation de vibrations selon l'une quelconque des revendications 1 à 10, dans laquelle l'ignifuge à base d'halogène (B) est un ignifuge à base d'halogène avec un point de fusion de 150 °C ou moins.

12. Élément en caoutchouc ignifuge à isolation de vibrations comprenant :
un corps vulcanisé de la composition de caoutchouc ignifuge à isolation de vibrations selon l'une quelconque des revendications 1 à 11.
